(19) **Europäisches Patentamt / European Patent Office / Office européen des brevets**

(11) **EP 2 219 333 B1**

(12) **FASCICULE DE BREVET EUROPEEN**

(45) Date de publication et mention
de la délivrance du brevet:
**28.09.2011 Bulletin 2011/39**

(51) Int Cl.:
***H04L 27/26*** *(2006.01)*

(21) Numéro de dépôt: **10153344.6**

(22) Date de dépôt: **11.02.2010**

(54) **Procédé et dispositif de transmission d'un signal multiporteuse réduisant le rapport puissance crête à puissance moyenne et programme correspondant**

Mehrträgersignalübertragungsverfahren und -vorrichtung zur PAPR-Reduzierung sowie zugehöriges Programm

Multicarrier signal transmission method and device for PAPR reduction and corresponding programme

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **12.02.2009 FR 0950895**

(43) Date de publication de la demande:
**18.08.2010 Bulletin 2010/33**

(73) Titulaire: **Ecole Superieure d'electricite
91192 Gif Sur Yvette Cedex (FR)**

(72) Inventeurs:
• **Palicot, Jacques
35000 Rennes (FR)**
• **Louet, Yves
35830 Betton (FR)**
• **Guel, Désiré
35000 Rennes (FR)**

(74) Mandataire: **Bioret, Ludovic et al
Cabinet Vidon
16B, rue Jouannet
B.P. 90333
Technopôle Atalante
F-35703 Rennes Cedex 07 (FR)**

(56) Documents cités:
**WO-A1-2008/074801 FR-A1- 2 913 835**

• **JAE HONG LEE ET AL: "Modulation, coding and signal processing for wireless communications - An overview of peak-to-average power ratio reduction techniques for multicarrier transmission" IEEE WIRELESS COMMUNICATIONS, IEEE SERVICE CENTER, PISCATAWAY, NJ, US, vol. 12, no. 2, 1 avril 2005 (2005-04-01), pages 56-65, XP011130574 ISSN: 1536-1284**

**Description**

**1. Domaine de l'invention**

Le domaine de l'invention est celui de la transmission de signaux numériques, notamment sur les canaux de transmission à trajets multiples.

Plus précisément, l'invention concerne les techniques de modulation multiporteuse, notamment de type OFDM (« Orthogonal Frequency Division Multiplex » en anglais, pour « multiplexage par répartition orthogonale en fréquence »). La modulation OFDM est de plus en plus utilisée pour la transmission numérique, en particulier sur les canaux de transmission à trajets multiples. Cette technique de modulation multiporteuse permet notamment de s'affranchir de l'interférence entre symboles généralement observée lorsqu'on utilise une modulation monoporteuse sur un canal à trajets multiples.

Du fait de sa robustesse intrinsèque aux canaux sélectifs en fréquence, la modulation OFDM est notamment, mais non exclusivement, utilisée dans les réseaux locaux sans-fil (WiFI ou WiMAX), la télévision numérique terrestre (TNT) ou encore l'ADSL (de l'anglais « Asymmetric Digital Subscriber Line ») et l'HIPERLAN/2 (de l'anglais « HIgh PErformance Radio Local Area Network »), mais aussi pour des standards tels que ceux relatifs à la diffusion Audio Numérique (DAB pour « Digital Audio Broadcasting » en anglais), la diffusion Vidéo Numérique (DVB-T pour « Digital Video Broadcasting » en anglais).

**2. Art antérieur**

**2.1 Inconvénients de la modulation OFDM**

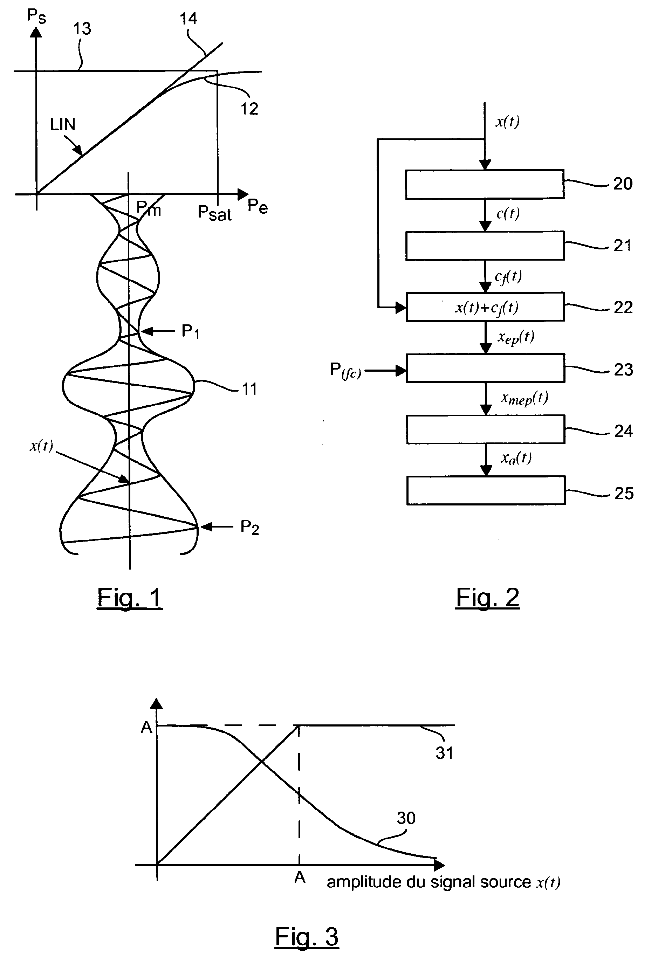

Un des principaux inconvénients de l'OFDM à ce jour reste que les signaux OFDM possèdent une très large bande et présentent en conséquence une grande variation d'amplitude. L'enveloppe du signal ainsi modulé, présente une forte dynamique comme illustrée schématiquement, sur la figure 1, par le signal $x(t)$ et son enveloppe 11.

Par ailleurs, le signal ainsi modulé, avant d'être transmis, doit être amplifié pour compenser les atténuations de propagation. On a également représenté, sur la figure 1, les caractéristiques typiques 12 d'un amplificateur de puissance RF, avec, en abscisses, la puissance $P_e$ du signal source en entrée de l'amplificateur et, en ordonnées, la puissance $P_s$ du signal en sortie de l'amplificateur. En particulier, tant que l'amplificateur n'est pas arrivé à saturation (asymptote horizontale 13 représentée en traits mixtes), l'amplification est considérée comme fonctionnant en zone linéaire LIN (asymptote oblique 14 représentée en traits pointillés) jusqu'à une puissance seuil de saturation $P_{SAT}$.

Ainsi, en référence à nouveau à la figure 1, lorsque le signal source d'entrée x(t) présente une forte dynamique d'enveloppe :

- pour les parties d'enveloppe $P_1$ de faible amplitude, l'amplification n'est pas suffisante, et
- pour les parties d'enveloppe $P_2$ de forte amplitude, l'amplification risque néanmoins de dépasser le seuil de saturation de l'amplificateur et générer des distorsions non linéaires d'amplitude et de phase.

Le rapport puissance crête à puissance moyenne (PAPR, pour « Peak to Average Power Ratio » en anglais) des signaux émis est ainsi généralement très élevé et il augmente avec le nombre de sous-porteuses N.

Une grande valeur du PAPR conduit à prendre un recul par rapport au point de compression de l'amplificateur de puissance (de l'ordre du PAPR) pour éviter les distorsions non linéaires. Il s'ensuit une remontée spectrale du niveau des lobes secondaires (ACPR, pour « Adjacent Channel Power Ratio »), la génération d'harmoniques, une création d'interférences entre symboles non linéaires, une création d'interférences entre porteuses, ce qui entraîne notamment des erreurs de transmission et une dégradation du taux d'erreur binaire (TEB).

Ces distorsions aboutissent en outre à une diminution du rendement énergétique de l'amplificateur de puissance (quelques % au lieu de, classiquement, 70 %) et donc une augmentation importante de la consommation de l'émetteur. Ceci est une contrainte très forte pour l'utilisation de l'OFDM notamment dans les terminaux mobiles, sachant que la consommation de l'amplificateur de puissance peut représenter plus de 50% de la consommation totale d'un terminal.

**2.2 Art antérieur pour la réduction du PAPR**

On connaît déjà plusieurs méthodes pour réduire la puissance crête du signal OFDM.

Une solution courante consiste à s'assurer que la plage de fonctionnement de l'amplificateur reste limitée à une zone d'amplification linéaire, ce qui limite malheureusement le rendement de l'amplificateur.

Une deuxième approche est l'application d'une contrainte au codage sur la séquence de données émise pour limiter le PAPR. Cette méthode consiste à construire un jeu de mots de code qui minimise le PAPR. Plusieurs techniques de construction de ces codes ont été proposées. L'avantage de cette solution réside dans le fait qu'elle n'introduit pas de distorsion. En revanche, l'efficacité spectrale est pénalisée sans même pour autant apporter un gain de codage. De plus, à ce jour, son champ d'application est limité aux modulateurs OFDM à faibles nombres de sous-porteuses.

Une troisième méthode propose de réserver certaines sous-porteuses du multiplex OFDM, qui ne transportent pas d'informations mais des symboles choisis de façon optimisée, à l'émission, pour réduire le PAPR. Tout comme les deux précédentes méthodes, cette solution n'apporte pas de distorsion au signal émis, mais en réduit l'efficacité spectrale au prix d'une complexité supplémentaire dans l'émetteur.

Une quatrième technique, appelée « Selected Mapping », consiste à appliquer à chaque symbole de la séquence à transmettre une rotation de phase. Plusieurs motifs de rotation de phase peuvent être définis. Pour chaque motif appliqué à la séquence à transmettre, on effectue les opérations pour obtenir le signal OFDM et on transmet celui présentant le plus petit PAPR. De nouveau cette technique n'apporte pas de distorsion, mais elle nécessite de communiquer au récepteur la séquence de rotation utilisée à l'émission avec une très grande fiabilité, ce qui conduit à une réduction de l'efficacité spectrale et une augmentation significative de la complexité du système pour acheminer le numéro du motif utilisé via un canal dédié. En outre, si cette transmission est erronée, toute la trame OFDM sera perdue. Elle augmente également la complexité à l'émission, puisque plusieurs traitements doivent être effectués en parallèle, pour choisir ensuite le plus efficace.

Ainsi, il existe une multitude de techniques proposant de réduire le PAPR, dont un récapitulatif est donné par exemple dans le document "A classification of methods for efficient power amplification of signals" (Y. Louet, J. Palicot, Annals of Télécommunications, vol. 63, Issue 7-8, pp 351-368, July/August 2008).

Ces différentes techniques présentent en outre l'inconvénient de ne pas être à compatibilité descendante : elles imposent un traitement idoine en réception, ce qui ne permet pas leur intégration dans les systèmes déjà existants.

Parmi les techniques connues de réduction du PAPR à compatibilité descendante, figure la technique d'écrêtage ou encore appelée limiteur (de l'anglais « clipping »), qui classiquement écrête l'amplitude du signal lorsqu'il dépasse un seuil prédéfini.

La technique d'écrêtage classique, délivrant un signal écrêté, est classiquement représentée par l'expression :

$$f(x) = \begin{cases} +E \text{ si } x(t) > +E \\ x(t) \text{ si } -E \le \dot{x}(t) \le +E \\ -E \text{ si } x(t) < E \end{cases}$$

avec :

- $x(t)$ le signal source d'entrée ;

- E le seuil d'écrêtage prédéfini.

Cependant, cet écrêtage classique est par nature non linéaire et introduit une distorsion du signal émis se traduisant non seulement par un TEB (Taux d'Erreur Binaire) dégradé mais également par une remontée des lobes secondaires de la DSP (Densité spectrale de puissance). En effet, l'écrêtage classique entraîne la génération de bruit sur l'ensemble du spectre et en particulier sur les sous-porteuses situées en dehors de la bande utile du signal émis.

Cette remontée spectrale peut être réduite par l'utilisation d'un filtre sélectif comme proposé dans le document « Effects of clipping and filtering on the performance of OFDM » (X. Li, L. Cimini, Electronic Letters 2(5), pages 131-133, 1998). Ce filtre proposé dès les premières investigations de la technique d'écrêtage peut être considéré comme faisant partie de la méthode d'écrêtage. Ce filtre met en oeuvre un filtrage numérique classique dit hors bande, supprimant les sous-porteuses fréquentielles du signal écrêté n'appartenant pas à la bande de fréquence allouée au signal source d'entrée.

Cependant, l'efficacité d'une telle technique d'écrêtage, utilisant un signal écrêté défini ci-dessus, est limitée. En effet, cet écrêtage suivi de filtrage génère néanmoins deux types de problèmes classiques :

- interférence entre symboles non linéaires ;
- bruit dans la bande utile correspondant aux différents produits d'intermodulation tombant dans la bande utile, ce qui va entraîner une dégradation du TEB (Taux d'Erreur Binaire).

## 3. Exposé de l'invention

L'invention propose une solution nouvelle qui ne présente pas l'ensemble de ces inconvénients de l'art antérieur, sous la forme d'un procédé de transmission multiporteuse d'un signal représentatif d'un signal source, destiné à être amplifié par un amplificateur de puissance puis transmis via un canal de transmission, comprenant les étapes suivantes :

- génération d'un signal prédéterminé, dit signal additionnel ;
- filtrage numérique dudit signal additionnel, délivrant un signal additionnel filtré ;
- addition aux sous-porteuses d'un ensemble de sous-porteuses prédéterminé dudit signal source, dudit signal additionnel filtré, de façon à obtenir un signal présentant un rapport puissance crête à puissance moyenne inférieur au rapport puissance crête à puissance moyenne dudit signal source, dit signal à enveloppe compacte ;
- modulation d'une onde porteuse par ledit signal à enveloppe compacte, délivrant un signal modulé à enveloppe compacte ;
- amplification dudit signal modulé à enveloppe compacte, à l'aide d'un amplificateur de puissance, délivrant un signal amplifié ;
- émission dudit signal amplifié.

Selon l'invention, le signal additionnel est défini par une fonction décroissante lorsque l'amplitude du signal source augmente.

Ainsi, l'invention repose sur une approche nouvelle et inventive de la transmission d'un signal. En effet, l'invention propose ainsi d'améliorer la technique d'écrêtage classique de réduction du PAPR, au moyen d'un signal additionnel défini par une fonction décroissante.

En effet, le signal additionnel selon l'invention ayant une puissance décroissante lorsque l'amplitude du signal source augmente, la puissance ajoutée au signal source, pour obtenir le signal à enveloppe compacte, est moindre en comparaison avec celle du signal additionnel correspondant à la technique d'écrêtage classique.

Ainsi à l'encontre des habitudes de l'homme du métier, l'invention propose d'utiliser un signal additionnel défini par une fonction décroissante lorsque l'amplitude du signal source augmente, et non un signal additionnel tel que défini classiquement selon la combinaison d'une fonction croissante et d'une fonction constante.

Par ailleurs, cette solution garantit une compatibilité descendante c'est-à-dire qu'il n'est pas nécessaire pour le récepteur d'être informé du type de traitement réalisé en émission.

De façon préférentielle, la fonction décroissante, définissant le signal additionnel, peut être approximée par au moins un segment de droite, et par exemple par une ligne brisée, ladite ligne brisée étant composée d'au moins trois segments, un premier segment correspondant à des amplitudes faibles, et deuxième segment correspondant à des amplitudes intermédiaires et un troisième segment correspondant à des amplitudes élevées, la pente dudit deuxième segment étant supérieure à la pente desdits premier et troisième segments.

Ainsi, l'invention permet de réduire simplement le PAPR, en additionnant un signal additionnel de simple complexité au signal source de façon à obtenir un signal à enveloppe compacte efficace.

Dans une version simplifiée, il pourra donc s'agir d'un unique segment de droite. Dans une autre version, on pourra prévoir trois segment de droites D1, D2, D3 définissant la fonction décroissante du signal additionnel. Si l'on considère k1, k2, k3 les coefficients directeurs respectifs des segments de droite D1, D2, D3, alors :

$$|k1| < |k2| \; et \; |k3| < |k2|$$

Bien sûr, le signal additionnel peut également être défini par une fonction mathématique adaptée, et notamment par une fonction sécante hyperbolique.

Une telle fonction sécante hyperbolique peut par exemple être définie par l'équation suivante :

$$f(r) = A \sec h(\eta r) = \frac{2A}{e^{\eta r} + e^{-\eta r}}$$

où :

$A$ représente le paramètre de contrôle de la puissance moyenne de sortie,
$\eta$ représente le paramètre de performance représentant le gain en réduction du rapport puissance crête à puissance moyenne,

*r* l'amplitude du signal source.

Ainsi, contrairement aux techniques connues de l'homme du métier pour réduire la puissance crête du signal source, le procédé selon l'invention met en oeuvre une méthode simple qui exploite les propriétés de la fonction sécante hyperbolique et permet de réduire efficacement le PAPR, tout en conservant les performances de la modulation.

Avantageusement, ledit signal source comprend une pluralité de sous-porteuses de données pour porter le signal de données et une pluralité de sous-porteuses vides, lesdites sous-porteuses vides étant :

- définies dans la bande allouée au signal source selon un standard prédéterminé, et/ou ;
- crées par sur-échantillonnage et n'appartenant pas à la bande de fréquence allouée audit signal source.

On entend par « sous-porteuses de données » (ou encore « sous-porteuses données ») les sous-porteuses utilisées pour porter le signal source. Ces sous-porteuses de données sont situées dans une bande utile de la bande allouée.

Par opposition, on entend par « sous-porteuses vides » des sous-porteuses ne portant pas de données du signal source. Deux cas de figure peuvent se présenter :

- de telles sous-porteuses vides, ne contenant pas d'information du signal source, sont définies dans la bande allouée au signal source selon un standard prédéterminé, ou
- si la bande allouée au signal source ne contient pas de telles sous-porteuses vides, celles-ci sont crées par sur-échantillonnage en dehors de la bande allouée audit signal source.

Un exemple de la première approche est la norme DVB-T2, décrite notamment par le document DVB document A122, « Frame structure channel coding and modulation for a second generation digital terrestrial television broadcasting system (DVB-T2) », (dvb.org juin 2008), présente pour le mode OFDM 2k un spectre comportant 2048 sous-porteuses, dont 1705 sous-porteuses dans la bande allouée incluant 18 sous-porteuses vides (les sous-porteuses restantes étant hors bande et réparties de part et d'autre des sous-porteuses de la bande utile).

Un exemple de la deuxième approche, c'est-à-dire si la bande allouée au signal source ne contient pas de telles sous-porteuses vides, les sous-porteuses vides obtenues par sur-échantillonnage en dehors de la bande utile peuvent, par exemple, être obtenues selon la technique décrite par le document "Blind Equalization of OFDM Systems Based on the Minimization of a Quadratic Criterion", (M. De Courville, P. Duhamel, P. Madec, J. Palicot, ICC'96, Juin 96, Dallas, US). En effet, ce document décrit la création de sous-porteuses « nulles » (normalement non prévues pour l'émission du signal) et notamment de sous-porteuse dites « fantômes », par sur-échantillonage, pour porter le signal additionnel, en appliquant ensuite une contrainte au signal additionnel pour respecter un gabarit normalisé (imposé typiquement par un standard de télécommunication définissant les sous-porteuses autorisées).

Dans un troisième mode de réalisation, ces deux approches peuvent être combinées.

Par ailleurs, les sous-porteuses vides peuvent également être incluses dans des bandes de garde situées de part et d'autres de la bande utile, laquelle est au centre de la bande allouée telle que définie, par exemple, par la norme IEEE 802.1 1a/g et qui sera décrite plus loin dans la description d'un mode de réalisation particulier de l'invention.

Selon l'invention, ce signal additionnel caractéristique, défini par une fonction sécante hyperbolique, est ajouté au signal source sur lesdites sous-porteuses vides pour réduire le PAPR, et obtenir ledit signal à enveloppe compacte. Ainsi, on évite l'introduction de bruit sur les sous-porteuses de données.

Une technique d'addition d'un signal additionnel à un signal source dans lesdites sous-porteuses vides est notamment décrite dans le document de brevet français FR 2 913 835.

On rappelle notamment que selon ce document, une pluralité de contraintes conjointes sont appliquées au signal à enveloppe compacte, obtenu après addition, comprenant au moins :

- une limitation de la densité spectrale de puissance du signal à enveloppe compacte selon un gabarit imposé par un standard de télécommunication, en optimisant en particulier le signal correcteur dans les fréquences porteuses supplémentaires obtenues par sur-échantillonnage, et
- et un contrôle d'augmentation de la puissance moyenne du signal à enveloppe compacte relativement à la puissance moyenne du signal source.

Alors que l'homme du métier cherche le plus souvent à augmenter la puissance du signal à émettre jusqu'à la limite autorisée par le fonctionnement de l'amplificateur, le procédé selon l'invention impose ici des contraintes sur la puissance moyenne du signal à enveloppe compacte et par conséquent sur celle du signal source.

Selon un mode de réalisation, ladite étape de filtrage numérique dudit signal additionnel, selon l'invention, met en oeuvre un filtrage numérique dit hors bande, supprimant les sous-porteuses dudit signal additionnel n'appartenant pas à la bande de fréquence allouée audit signal source.

Avantageusement, ladite étape de filtrage numérique met en oeuvre un filtrage numérique dit « réservé dans la bande », sélectionnant au moins une sous-porteuse dudit signal additionnel correspondant à une sous-porteuse vide, présente « naturellement », dans ladite bande de fréquence allouée audit signal source.

En effet, si l'on considère que la bande utile du signal source présente « naturellement » selon un standard prédéterminé, des sous-porteuses vides, le filtrage numérique mis en oeuvre selon l'invention, sélectionnera uniquement les sous-porteuses correspondantes du signal additionnel, défini par une fonction sécante hyperbolique.

Avantageusement, l'étape de filtrage numérique met en oeuvre un filtrage numérique dit « réservé hors de la bande », sélectionnant au moins une sous-porteuse dudit signal additionnel correspondant à une sous-porteuse vide, crée par sur-échantillonnage et n'appartenant pas à la bande de fréquence allouée audit signal source. Cette opération de filtrage numérique respecte préférentiellement un standard d'émission prédéterminé.

On rappelle que, notamment dans le cas où la bande utile du signal source ne présente aucune sous-porteuses vides, des sous-porteuses vides peuvent être crées par sur-échantillonnage en dehors de la bande. L'invention propose ici la mise en oeuvre d'un filtrage numérique sélectionnant les sous-porteuses du signal additionnel correspondant aux sous-porteuses vides du signal source, situées en dehors de la bande allouée au signal source.

Ainsi, contrairement aux techniques de filtrage numérique connues de l'homme du métier, qui appliquent un filtrage numérique classique dit hors bande, tel que décrit précédemment, le procédé selon l'invention sélectionne au moins une sous-porteuse du signal additionnel correspondant à une sous-porteuse vide du signal source.

Au contraire de la technique d'écrêtage classique l'invention n'entraîne aucune dégradation du TEB (Taux d'Erreur Binaire). En effet, la sélection des sous-porteuses du signal additionnel correspondantes aux sous-porteuses vides du signal source délivre un signal additionnel filtré, dont l'addition au signal source produira un signal à enveloppe compact au bruit limité. Le bruit généré étant en effet limité aux seules sous-porteuses du signal à enveloppe compact correspondant aux sous-porteuses vides du signal source.

De façon avantageuse, lesdites étapes de génération dudit signal additionnel, de filtrage numérique et d'addition sont itérées au moins une fois.

De plus, les itérations desdites étapes de génération dudit signal additionnel, de filtrage numérique et d'addition sont interrompues lorsqu'une variation inférieure à un seuil prédéterminé est atteinte.

Préférentiellement, ledit seuil correspond à une valeur comprise entre 0,1 et 0,5 dB, notamment 0,2 dB, du rapport puissance crête à puissance moyenne.

Ainsi, l'invention propose une mise en oeuvre itérative du procédé de transmission, qui permet de réduire efficacement et rapidement le PAPR.

L'invention concerne également un dispositif de transmission multiporteuse d'un signal représentatif d'un signal source, destiné à être amplifié puis transmis via un canal de transmission, comprenant :

- des moyens de génération d'un signal prédéterminé, dit signal additionnel,
- des moyens de filtrage numérique dudit signal additionnel, délivrant un signal additionnel filtré ;
- des moyens d'addition aux sous-porteuses d'un ensemble de sous-porteuses prédéterminé dudit signal source, dudit signal additionnel filtré, de façon à obtenir un signal présentant un rapport puissance crête à puissance moyenne inférieur au rapport puissance crête à puissance moyenne dudit signal source, dit signal à enveloppe compacte ;
- des moyens de modulation d'une onde porteuse par ledit signal à enveloppe compacte, délivrant un signal modulé à enveloppe compacte ;
- des moyens d'amplification dudit signal modulé à enveloppe compacte, à l'aide d'un amplificateur de puissance, délivrant un signal amplifié ;
- des moyens d'émission dudit signal amplifié.

Selon l'invention, le signal additionnel est défini par une puissance décroissante lorsque l'amplitude dudit signal source augmente.

Un tel dispositif de transmission est notamment apte à mettre en oeuvre le procédé de transmission selon l'invention tel que décrit précédemment.

Ce dispositif peut notamment être inclus dans une station de base d'un réseau de télécommunication en contexte de modulation multiporteuse.

L'invention concerne encore un produit programme d'ordinateur téléchargeable depuis un réseau de communication et/ou enregistré sur un support lisible par ordinateur et exécutable par un processeur. Selon l'invention, ledit produit programme d'ordinateur comprend des instructions de code de programme pour la mise en oeuvre du procédé de transmission décrit ci-dessus, lorsqu'il est exécuté sur un ordinateur.

**4. Liste des figures**

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1, déjà commentée en relation avec l'art antérieur, illustre les caractéristiques d'un amplificateur classique ainsi que les enveloppes respectives du signal source ;
- la figure 2 illustre les principales étapes d'un procédé de transmission selon l'invention ;
- la figure 3 illustre le signal additionnel défini par une fonction décroissante lorsque l'amplitude du signal source augmente selon l'invention, ce signal est comparé au signal additionnel de la technique classique d'écrêtage ;
- la figure 4 est un schéma synoptique d'un exemple d'un dispositif de transmission selon l'invention ;
- la figure 5 illustre l'effet d'un sur-échantillonnage sur le nombre de sous-porteuses disponibles pour la mise en oeuvre de l'invention ;
- les figures 6A, 6B et 6C illustrent les spectres du signal source et du signal additionnel et leur évolution selon le mode de filtrage sélectionné.

**5. Description d'un mode de réalisation de l'invention**

L'invention repose donc sur l'utilisation d'un signal additionnel dont l'amplitude décroît lorsque l'amplitude du signal source augmente. La puissance ajoutée au signal source, pour obtenir le signal à enveloppe compacte, est moindre en comparaison avec celle du signal additionnel correspondant à la technique d'écrêtage classique.
Par ailleurs, ce signal additionnel est filtré numériquement de manière à être ajouté au signal source sur lesdites sous-porteuses vides pour réduire le PAPR et limiter la dégradation du TEB. Ainsi, on évite l'introduction de bruit sur les sous-porteuses de données.
On décrit ci-après en relation avec la figure 2, les principales étapes mises en oeuvre pour la réduction du PAPR proposée selon l'invention.
Comme illustré en figure 2, la transmission multiporteuse d'un signal représentatif d'un signal source $x(t)$, destiné à être amplifié par un amplificateur de puissance puis transmis via un canal de transmission, comprends les étapes suivantes :

- génération 20 d'un signal prédéterminé, dit signal additionnel $c(t)$ ;
- filtrage numérique 21 dudit signal additionnel, délivrant un signal additionnel filtré $c_f(t)$ ;
- addition 22 aux sous-porteuses d'un ensemble de sous-porteuses prédéterminé dudit signal source $x(t)$, dudit signal additionnel filtré $c_f(t)$, de façon à obtenir un signal présentant un rapport puissance crête à puissance moyenne inférieur au rapport puissance crête à puissance moyenne dudit signal source, dit signal à enveloppe compacte $x_{ep}(t)$;
- modulation 23 d'une onde porteuse par ledit signal à enveloppe compacte $x_{ep}(t)$, délivrant un signal modulé à enveloppe compacte $x_{mep}(t)$;
- amplification 24 dudit signal modulé à enveloppe compacte $x_{mep}(t)$, à l'aide d'un amplificateur de puissance, délivrant un signal amplifié $x_a(t)$;
- émission 25 dudit signal amplifié $x_a(t)$;

Plus précisément, la figure 3 illustre, pour un mode de réalisation particulier de l'invention, le signal additionnel $c(t)$ défini par une fonction sécante hyperbolique 30. Cette fonction sécante hyperbolique est définie par l'équation suivante :

$$f(r) = A \sec h(\eta r) = \frac{2A}{e^{\eta r} + e^{-\eta r}}$$

où :

$A$ représente le paramètre de contrôle de la puissance moyenne de sortie,
$\eta$ représente le paramètre de performance représentant le gain en réduction du rapport puissance crête à puissance moyenne,
$r$ l'amplitude du signal source.

Ce signal additionnel décroît lorsque l'amplitude du signal source $x(t)$ augmente, contrairement au signal additionnel propre à la technique d'écrêtage classique 31.

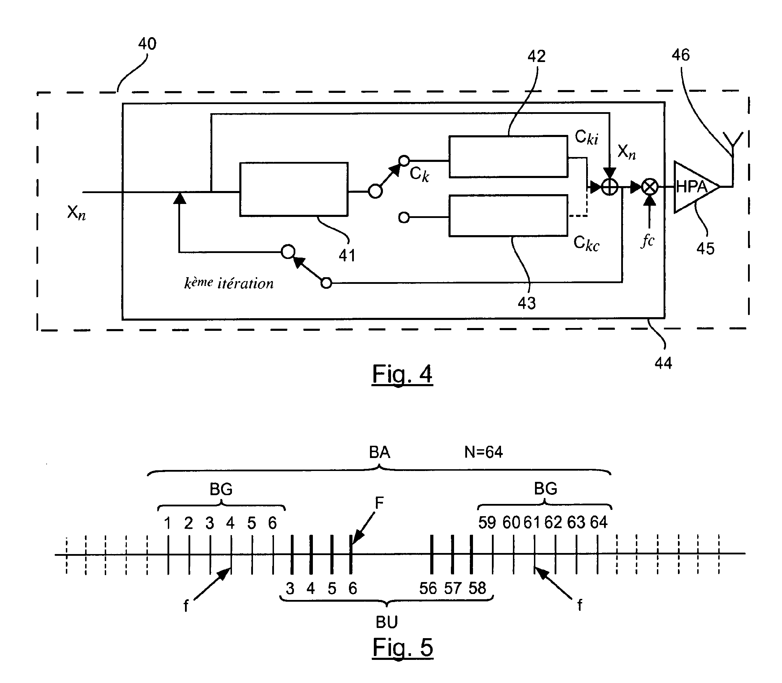

On présente en relation avec la figure 4, un schéma synoptique d'un exemple d'un dispositif de transmission 40 selon l'invention, dans un contexte de signal OFDM.

On considère $x_n$ le symbole OFDM discret du domaine temporel tel que :

$$x_n \quad r_n e^{j\varphi_n}$$

avec respectivement : $r_n$ l'amplitude et $\varphi_n$ la phase du symbole $x_n$.

L'ensemble des symboles $X_n$ forment le signal source $X(f)$ dans le domaine fréquentiel correspondant au signal $x(t)$ dans le domaine temporel.

Le dispositif de transmission 40 comprend des moyens de génération 41 du signal additionnel $c(t)$ défini par une fonction décroissante sécante hyperbolique tel que représenté en relation avec la figure 3.

Ce signal additionnel peut être représenté sous forme de symbole discret dans le domaine temporel tel que :

$$c_n = f(r_n)e^{j\varphi_n} - x_n$$

avec f telle que définie précédemment :

$$f(r) = A \sec h(\eta r) = \frac{2A}{e^{\eta r} + e^{-\eta r}}$$

où :

$A$ représente le paramètre de contrôle de la puissance moyenne de sortie,
$\eta$ représente le paramètre de performance représentant le gain en réduction du rapport puissance crête à puissance moyenne,
$r$ l'amplitude du signal source.

Ainsi le moyen de génération 41 du signal additionnel délivre un symbole $C_k$.

L'ensemble des symboles $C_k$ forment le signal additionnel $C(f)$ dans le domaine fréquentiel correspondant au signal $c(t)$ dans le domaine temporel.

La transformée du signal additionnel $C(f)$ dans le domaine fréquentiel par transformée de Fourier classique (FFT) est telle que le signal additionnel dans le domaine fréquentiel comporte $NL$ points de fréquences :

$$C = C^{(I)} + C^{(O)}$$

avec :

$$I = \left[ 0, ..., \frac{N}{2} - 1 \right] \cup \left[ (L - \frac{1}{2})N, ..., NL - 1 \right],$$ l'ensemble des indices des fréquences discrètes de la bande utile ;

$$O = \left[ \frac{N}{2}, ..., (L - \frac{1}{2})N - 1 \right],$$ l'ensemble des indices des fréquences discrètes hors bande ;

$$C_k^{(I)} \begin{cases} C_k, k \in I \\ 0, k \in O \end{cases}$$

$$C_k^{(O)} \begin{cases} 0, k \in I \\ C_k, k \in O \end{cases}$$

En relation avec la figure 4, le signal additionnel est ensuite filtré numériquement selon deux alternatives possibles, mis en oeuvre par deux moyens de filtrage 42 et 43, mettant en oeuvre respectivement un filtrage numérique « réservé dans la bande » ou « réservé hors de la bande » d'une part, et un filtrage numérique classique hors bande d'autre part.

Le filtrage 43 hors bande classique supprime les sous-porteuses n'appartenant pas à la bande de fréquence allouée au signal source d'entrée, on obtient ainsi les sous-porteuses (symboles OFDM $C_{kc}$) du signal additionnel appartenant à l'ensemble $C_k^{(I)}$.

Le filtrage 42 « réservé dans la bande » ou « réservé hors de la bande » sélectionne les sous-porteuses (symboles OFDM $C_{ki}$) du signal additionnel correspondant aux sous-porteuses vides dans la bande ou hors de la bande selon que ces sous-porteuses vides sont « naturellement » définies par un standard prédéterminé dans la bande, ou qu'elles ont été crées par sur-échantillonnage hors de la bande allouée au signal source.

Les symboles OFDM vérifient la relation :

$$C_{ki}^{(I)} \begin{cases} C_k, k \in R \\ 0, k \in (O \cup R^c) \end{cases}$$

Avec $R$ l'ensemble des sous-porteuses du signal additionnel correspondant aux sous-porteuses vides du signal source, et $R^c$ l'ensemble complémentaire de R dans I.

Avantageusement, selon l'invention, le filtrage 42 est sélectionné afin de limiter efficacement le bruit généré par la technique d'écrêtage et éviter ainsi la dégradation du TEB.

Une fois ce signal additionnel filtré $c_f(t)$ obtenu, on l'additionne au signal source. Ces opérations, de génération du signal additionnel, d'addition et de filtrage sont itérées au moins deux fois, jusqu'à obtenir une variation du PAPR inférieur à 0,2 dB.

Le dispositif de transmission, selon ce mode de réalisation particulier de l'invention comprend donc une unité 44 qui effectue la génération du signal additionnel, défini par une fonction sécante hyperbolique, le filtrage de ce signal additionnel et l'addition au signal source.

Ainsi à la sortie de cette unité 44 on obtient le signal à enveloppe compacte $x_{ep}(t)$.

Le signal à enveloppe compacte $x_{ep}(t)$ délivré par l'unité 44 est ensuite utilisé pour moduler une onde porteuse de fréquence $f_c$ délivrant un signal modulé à enveloppe compacte. Cette modulation est une multiplication du signal à enveloppe compacte par une onde porteuse, ce qui revient à transposer à une fréquence plus haute (ou plus basse) le signal à enveloppe compacte $x_{mep}(t)$.

Le signal modulé à enveloppe compacte $x_{mep}(t)$ est ensuite amplifié à l'aide d'un amplificateur de puissance 45, délivrant un signal amplifié $x_a(t)$ puis émis par une antenne d'émission 46.

On présente en relation avec la figure 5, l'effet du sur-échantillonnage sur le nombre de sous-porteuses disponibles dans le cadre d'une modulation OFDM conforme à la norme IEEE 802.11a.

Cette norme spécifie l'utilisation de $N = 64$ sous-porteuses dont :

- 48 sous-porteuses de données F pour porter des données (« data »), autrement dit le signal source,
- 4 sous-porteuses pilotes F pour porter un signal pilote de synchronisation, et
- 12 sous-porteuses vides pour éviter tout recouvrement entre deux modulations voisines.

En référence à la figure 5, on appelle « bande utile », la bande de fréquence BU comportant les 52 sous-porteuses (c'est-à-dire les 48 sous-porteuses données et les 4 sous-porteuses pilotes) réellement utilisées pour la transmission en modulation IEEE 802.11a. Les 12 sous-porteuses vides sont situées en dehors de la bande utile, aux deux extrémités de celle-ci, à droite et à gauche de la bande utile.

Par définition, on appelle aussi « bandes de garde », les deux bandes de fréquence BG situées de part et d'autre de la bande utile BU et comportant les sous-porteuses virtuelles vides (12 au total soit 6 à gauche et 6 à droite de la bande utile).

La bande utile et les deux bandes de garde forment la bande de fréquences BA bande allouée à une transmission en modulation IEEE 802.11a (avec *N = 64*).

Un sur-échantillonage revient à insérer des fréquences supplémentaires vides en dehors de la bande utile. Ces fréquences vides sont représentées en traits pointillés sur la figure 5 et se répartissent de part et d'autre de la bande allouée BA.

Selon un mode de réalisation particulier de l'invention, une sous-porteuse vide est insérée au centre de la bande utile.

Par exemple, partant de *N = 64* fréquences dans la bande allouée, un sur-échantillonnage d'un facteur *L = 4* revient à insérer *N(L-1) =192* sous-porteuses vides. En ajoutant à ces 192 sous-porteuses vides les 12 sous-porteuses vides spécifiées par la norme IEEE 802.11a, 204 sous-porteuses sont obtenues et sont susceptibles de porter le signal additionnel.

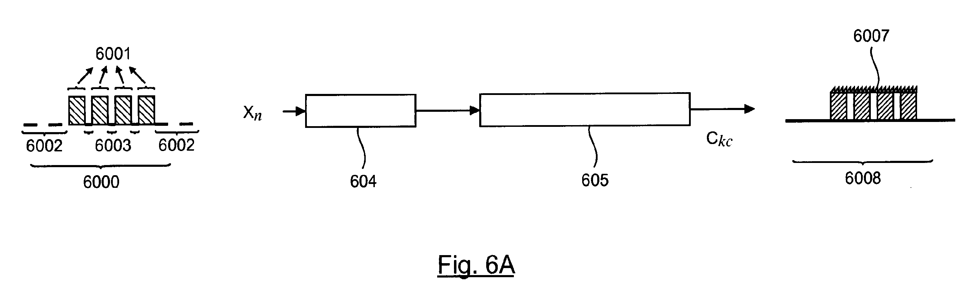

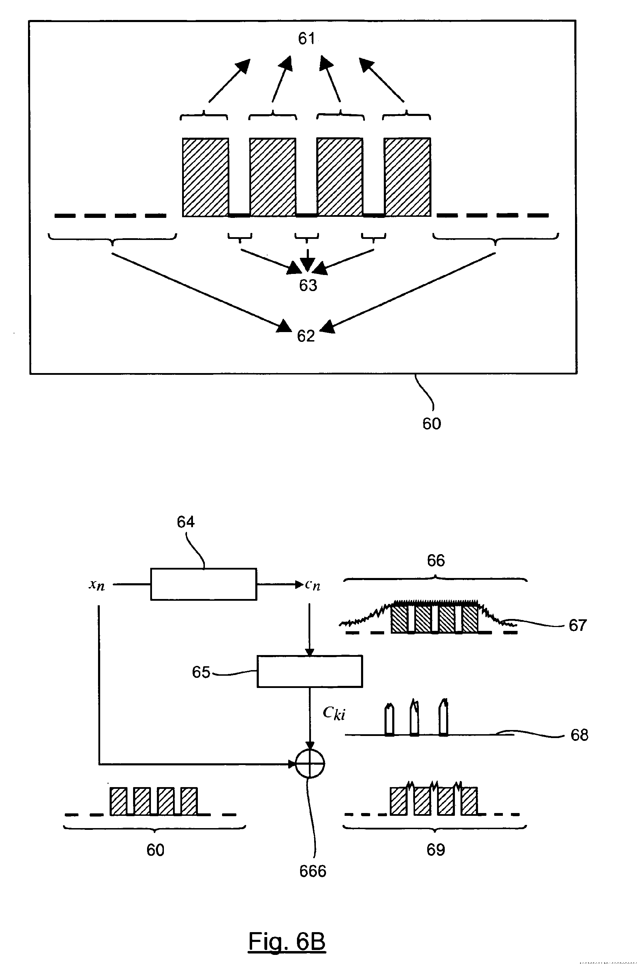

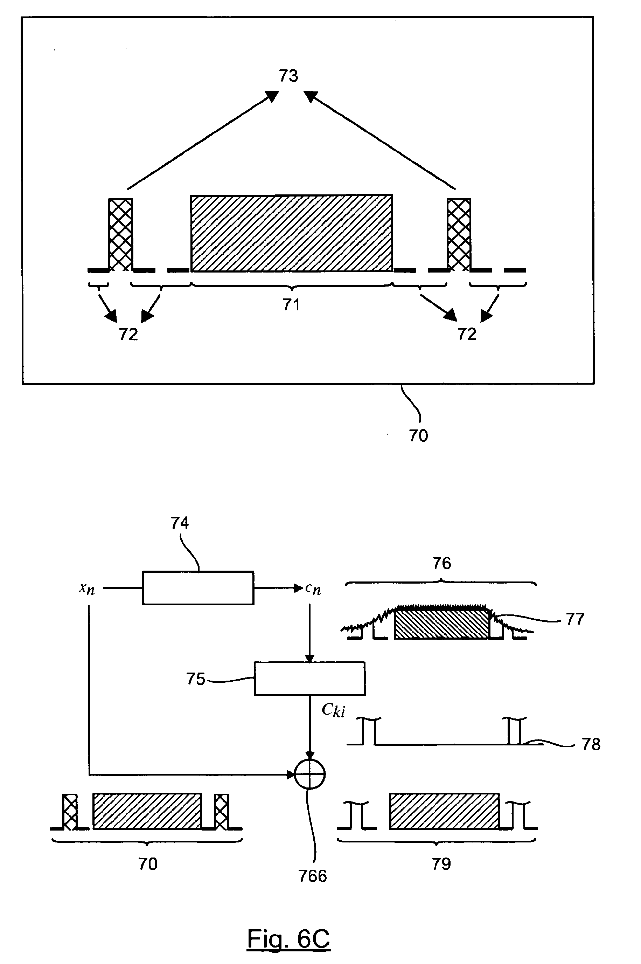

Les figures 6A, 6B et 6C illustrent les spectres du signal source et du signal additionnel et leur évolution selon le filtrage numérique sélectionné.

La figure 6A illustre le filtrage hors bande classique du signal additionnel *C(f)* et délivre le signal additionnel filtré 6008. On considère un signal source X(f) 6000 tel que représenté sur la figure 6A, ce signal présente des sous-porteuses vides 6003 définies selon un standard prédéterminé dans la bande utile et des sous-porteuses de données 6001, ainsi que des sous-porteuses hors de la bande utile 6002.

A partir du signal source X(f) composé des symboles OFDM $X_n$ 6000, il y a génération 604 puis filtrage numérique 605 et obtention des symboles $C_{kc}$ formant le spectre du signal additionnel filtré 6001. Lors de l'étape de génération du signal additionnel, défini selon l'invention par une fonction sécante hyperbolique, l'information du signal additionnel est répartie sur toute la bande.

Le module de génération du signal additionnel 604, utilisant la fonction d'écrêtage définie par une fonction sécante hyperbolique, délivre un signal additionnel proportionnel au signal source, auquel s'ajoute un bruit 6007 dit bruit d'écrêtage. Ainsi un symbol $c_n$ du signal additionnel vérifie par exemple la relation suivante :

$$c_n = (\alpha - 1)x_n + d_n$$

avec :

> ($\alpha$-1) correspond au facteur de proportionnalité entre le symbole source $x_n$ et le symbol du signal additionnel $c_n$ ;
> $d_n$ correspond au « symbole » bruit d'écrêtage correspondant.

Le spectre du signal additionnel filtré, selon un filtrage classique, revient à supprimer les sous-porteuses n'appartenant pas à la bande de fréquence allouée au signal source d'entrée, on obtient ainsi les sous-porteuses (symboles OFDM $C_{kc}$) du signal additionnel appartenant à l'ensemble $C_k^{(l)}$. Ainsi le spectre du signal additionnel filtré 6008, est composé des sous-porteuses portant le signal additionnel de la bande de fréquence allouée, c'est-à-dire les sous-porteuses correspondant aux sous-porteuses de données et aux sous-porteuses vides du signal source X(f) 6000. En outre, le spectre du signal additionnel filtré est également composé du bruit 6007 créé lors de la génération du signal additionnel 604.

La figure 6B illustre le filtrage « réservé dans la bande » du signal additionnel *C(f)* selon l'invention, et délivre le signal additionnel filtré 68. En effet, le signal source X(f) 60 présente « naturellement » dans la bande utile des sous-porteuses vides 63 et des sous-porteuses de données 61, ainsi que des sous-porteuses hors de la bande utile 62. A partir du signal X(f) 60, il y a génération 64 puis filtrage numérique 65 et obtention des symboles $C_{ki}$ formant le spectre du signal additionnel filtré 68.

En effet, à la sortie du module de génération du signal additionnel 64, on obtient un signal additionnel 66 qui présente un bruit 67 sur l'ensemble de la bande, et en particulier sur les sous-porteuses hors de la bande. Le filtrage 65 spécifique mis en oeuvre par l'invention, sélectionne ensuite uniquement les sous-porteuses du signal additionnel correspondant aux sous-porteuses vides du signal source. On limite ainsi le bruit additionné (666) au signal source pour obtenir le signal à enveloppe compact 69.

La figure 6C illustre le filtrage « réservé hors de la bande » du signal additionnel *C(f)* selon l'invention, et délivre le signal additionnel filtré 78. Le signal source X(f) 70 ne présente pas « naturellement » dans la bande utile des sous-porteuses vides, il y a alors création par sur-échantillonnage de sous-porteuses vides 73 en dehors de la bande. Ce signal source comporte également des sous-porteuses de données 71, ainsi que des sous-porteuses hors bande 72. A partir du signal X(f) 70, il y a génération 74 puis filtrage numérique 75 et obtention des symboles $C_{ki}$ formant le spectre du signal additionnel filtré 78.

Dans ce cas, à la sortie du module de génération du signal additionnel 74, on obtient un signal additionnel 76 qui présente un bruit 77 sur l'ensemble de la bande, et en particulier sur les sous-porteuses hors de la bande. Le filtrage 65 spécifique mis en oeuvre par l'invention, sélectionne ensuite uniquement les sous-porteuses du signal additionnel correspondant aux sous-porteuses vides du signal source créés par sur échantillonnage hors de la bande. On limite ainsi le bruit additionné (766) au signal source pour obtenir le signal à enveloppe compact 79.

**Revendications**

1. Procédé de transmission multiporteuse d'un signal représentatif d'un signal source, destiné à être amplifié par un amplificateur de puissance puis transmis via un canal de transmission, comprenant les étapes suivantes :

   - génération (20) d'un signal prédéterminé, dit signal additionnel ;
   - filtrage numérique (21) dudit signal additionnel, délivrant un signal additionnel filtré ;
   - addition (22) aux sous-porteuses d'un ensemble de sous-porteuses prédéterminé dudit signal source, dudit signal additionnel filtré, de façon à obtenir un signal présentant un rapport puissance crête à puissance moyenne inférieur au rapport puissance crête à puissance moyenne dudit signal source, dit signal à enveloppe compacte ;
   - modulation (23) d'une onde porteuse par ledit signal à enveloppe compacte, délivrant un signal modulé à enveloppe compacte ;
   - amplification (24) dudit signal modulé à enveloppe compacte, à l'aide d'un amplificateur de puissance, délivrant un signal amplifié ;
   - émission (25) dudit signal amplifié ;

   **caractérisé en ce que** ledit signal additionnel présente une puissance décroissante lorsque l'amplitude dudit signal source augmente.

2. Procédé selon la revendication 1, **caractérisé en ce que** ledit signal additionnel est défini par une fonction décroissante approximée par au moins un segment de droite.

3. Procédé selon la revendication 1, **caractérisé en ce que** ledit signal additionnel est défini par une fonction décroissante approximée par une ligne brisée, ladite ligne brisée étant composée d'au moins trois segments, un premier segment correspondant à des amplitudes faibles, et deuxième segment correspondant à des amplitudes intermédiaires et un troisième segment correspondant à des amplitudes élevées, la pente dudit deuxième segment étant supérieure à la pente desdits premier et troisième segments.

4. Procédé selon la revendication 1, **caractérisé en ce que** ledit signal additionnel est défini par une fonction décroissante correspondant à une fonction sécante hyperbolique.

5. Procédé selon la revendication 4, **caractérisé en ce que** ladite fonction sécante hyperbolique est définie par l'équation suivante :

$$f(r) = A \sec h(\eta r) = \frac{2A}{e^{\eta r} + e^{-\eta r}}$$

où :

   $A$ représente un paramètre de contrôle de la puissance moyenne de sortie,
   $\eta$ représente un paramètre de performance représentant le gain en réduction du rapport puissance crête à puissance moyenne,
   $r$ représente l'amplitude du signal source.

6. Procédé selon l'une quelconque des revendications 1 à 5, **caractérisé en ce que**, ledit signal source comprend une pluralité de sous-porteuses de données pour porter le signal de données et une pluralité de sous-porteuses vides, lesdites sous-porteuses vides étant :

   - définies dans la bande allouée au signal source selon un standard prédéterminé, et/ou ;
   - crées par sur-échantillonnage et n'appartenant pas à la bande de fréquence allouée audit signal source.

**7.** Procédé selon l'une quelconque des revendications 1 à 6, **caractérisé en ce que**, ladite étape de filtrage numérique dudit signal additionnel met en oeuvre un filtrage numérique dit hors bande, supprimant les sous-porteuses dudit signal additionnel n'appartenant pas à la bande de fréquence allouée audit signal source.

**8.** Procédé selon la revendication 6, **caractérisé en ce que** l'étape de filtrage numérique dudit signal additionnel met en oeuvre un filtrage numérique dit « réservé dans la bande », sélectionnant au moins une sous-porteuse dudit signal additionnel correspondant à une sous-porteuse vide, définie dans la bande allouée au signal source selon un standard prédéterminé.

**9.** Procédé selon la revendication 6, **caractérisé en ce que** l'étape de filtrage numérique dudit signal additionnel met en oeuvre un filtrage numérique dit « réservé hors de la bande », sélectionnant au moins une sous-porteuse dudit signal additionnel correspondant à une sous-porteuse vide crée par sur-échantillonnage et n'appartenant pas à la bande de fréquence allouée audit signal source.

**10.** Procédé selon la revendication 1, **caractérisé en ce que** lesdites étapes de génération dudit signal additionnel, de filtrage numérique et d'addition sont itérées au moins une fois.

**11.** Procédé selon la revendication 10, **caractérisé en ce que** les itérations desdites étapes de génération dudit signal additionnel, de filtrage numérique et d'addition sont interrompues lorsqu'une variation inférieure à un seuil prédéterminé est atteinte.

**12.** Procédé selon la revendication 11, **caractérisé en ce que** ledit seuil correspond à une valeur comprise entre 0,1 et 0,5 dB, notamment 0,2 dB, du rapport puissance crête à puissance moyenne.

**13.** Dispositif de transmission (40) multiporteuse d'un signal représentatif d'un signal source, destiné à être amplifié puis transmis via un canal de transmission, comprenant :

- des moyens de génération (41) d'un signal prédéterminé, dit signal additionnel,
- des moyens de filtrage numérique (42, 43) dudit signal additionnel, délivrant un signal additionnel filtré ;
- des moyens d'addition aux sous-porteuses d'un ensemble de sous-porteuses prédéterminé dudit signal source, dudit signal additionnel filtré, de façon à obtenir un signal présentant un rapport puissance crête à puissance moyenne inférieur au rapport puissance crête à puissance moyenne dudit signal source, dit signal à enveloppe compacte ;
- des moyens de modulation d'une onde porteuse par ledit signal à enveloppe compacte, délivrant un signal modulé à enveloppe compacte ;
- des moyens d'amplification dudit signal modulé à enveloppe compacte, à l'aide d'un amplificateur de puissance (45), délivrant un signal amplifié ;
- des moyens d'émission (46) dudit signal amplifié ;

**caractérisé en ce que** ledit signal additionnel présente une puissance décroissante , lorsque l'amplitude dudit signal source augmente.

**14.** Produit programme d'ordinateur téléchargeable depuis un réseau de communication et/ou enregistré sur un support lisible par ordinateur et exécutable par un processeur, **caractérisé en ce qu'**il comprend des instructions de code de programme pour la mise en oeuvre du procédé de transmission selon l'une au moins des revendications 1 à 9, lorsqu'il est exécuté sur un ordinateur.

**Claims**

**1.** Method for transmitting a multicarrier signal representative of a source signal, designed to be amplified by a power amplifier then transmitted via a transmission channel, comprising the following steps:

- generation (20) of a predetermined signal, referred to as an additional signal;
- digital filtering (21) of said additional signal, providing a filtered additional signal;
- addition (22) of said filtered additional signal to the subcarriers of a predetermined set of subcarriers of said source signal, so as to obtain a signal having a peak to average power ratio less than that of said source signal, referred to as a compact envelope signal;

- modulation (23) of a carrier wave by said compact envelope signal, providing a modulated compact envelope signal;
- amplification (24) of said modulated compact envelope signal, with the aid of a power amplifier, providing an amplified signal;
- transmission (25) of said amplified signal;

**characterised in that** said additional signal has a decreasing power when the amplitude of said source signal increases.

2. Method according to claim 1, **characterised in that** said additional signal is defined by a decreasing function approximated by at least one straight line segment.

3. Method according to claim 1, **characterised in that** said additional signal is defined by a decreasing function approximated by a broken line, said broken line being composed of at least three segments, a first segment corresponding to low amplitudes, and second segment corresponding intermediate amplitudes, and a third segment corresponding to high amplitudes, the slope of said second segment being greater than that of the first and third segments.

4. Method according to claim 1, **characterised in that** said additional signal is defined by a decreasing function corresponding to a hyperbolic secant function.

5. Method according to claim 4, **characterised in that** said hyperbolic secant function is defined by the following equation:

$$f(r) = A \operatorname{sech}(\eta r) = \frac{2A}{e^{\eta r} + e^{-\eta r}}$$

where:

A denotes a control parameter of the average output power,
η denotes a performance parameter representing the reduction gain of the peak to average power ratio,
r denotes the amplitude of the source signal.

6. Method according to any one of claims 1 to 5, **characterised in that** said source signal comprises a plurality of data subcarriers for carrying the data signal and a plurality of empty subcarriers, said empty subcarriers being:

- defined in the band allocated to the source signal according to a predetermined standard, and/or;
- created by oversampling and not belonging to the frequency band allocated to said source signal.

7. Method according to any one of claims 1 to 6, **characterised in that** said step of digital filtering of said additional signal implements a digital filtering referred to as out-of-band, removing the subcarriers of said additional signal not belonging to the frequency band allocated to said source signal.

8. Method according to claim 6, **characterised in that** the step of digital filtering of said additional signal implements a digital filtering referred to as "reserved-in-band", selecting at least one subcarrier of said additional signal corresponding to an empty subcarrier, defined in the band allocated to the source signal according to a predetermined standard.

9. Method according to claim 6, **characterised in that** the step of digital filtering of said additional signal implements a digital filtering referred to as "reserved-out-of-band", selecting at least one subcarrier of said additional signal corresponding to an empty subcarrier created by oversampling and not belonging to the frequency band allocated to said source signal.

10. Method according to claim 1, **characterised in that** said steps of generating said additional signal, digital filtering and addition are iterated at least once.

**11.** Method according to claim 10, **characterised in that** the iterations of said steps of generating said additional signal, digital filtering and addition are interrupted when a variation below a predetermined threshold is reached.

**12.** Method according to claim 11, **characterised in that** said threshold corresponds to a value of between 0.1 and 0.5 dB, in particular 0.2 dB, of the peak to average power ratio.

**13.** Device (40) for multicarrier transmission of a signal representative of a source signal, designed to be amplified and transmitted via a transmission channel, comprising:

- means (41) for generating a predetermined signal, referred to as an additional signal,
- means (42, 43) for digital filtering of said additional signal, providing a filtered additional signal;
- means for adding said filtered additional signal to the subcarriers of a predetermined set of subcarriers of said source signal, so as to obtain a signal with a peak to average power ratio less than that of said source signal, referred to as a compact envelope signal;
- means for modulating a carrier wave by said compact envelope signal, providing a modulated compact envelope signal;
- means for amplifying said modulated compact envelope signal, with the aid of a power amplifier (45), providing an amplified signal;
- means (46) for transmitting said amplified signal;

**characterised in that** said additional signal has a decreasing power when the amplitude of said source signal increases.

**14.** Computer program product downloadable from a communications network and/or recorded on a machine-readable medium and executable by a processor, **characterised in that** it includes program code instructions for implementing the transmission method according to at least one of claims 1 to 9, when it is executed on a computer.

**Patentansprüche**

**1.** Verfahren zur Multiträgerübertragung eines Signals, das für ein Quellensignal repräsentativ ist, das dazu bestimmt ist, von einem Leistungsverstärker verstärkt und dann über einen Übertragungskanal übertragen zu werden, das die folgenden Schritte aufweist:

- Erzeugen (20) eines vorbestimmten Signals, zusätzliches Signal genannt;
- digitale Filterung (21) des zusätzlichen Signals, die ein gefiltertes zusätzliches Signal liefert;
- Hinzufügen (22) des gefilterten zusätzlichen Signals zu den Hilfsträgern einer Einheit vorbestimmter Hilfsträger des Quellensignals, so dass ein Signal erzielt wird, das ein Verhältnis Spitzenleistung zu mittlerer Leistung kleiner als das Verhältnis Spitzenleistung zu mittlerer Leistung des Quellensignals aufweist, Signal mit kompaktem Mantel genannt;
- Modulation (23) einer Trägerwelle durch das Signal mit kompaktem Mantel, die ein moduliertes Signal mit kompaktem Mantel liefert;
- Verstärkung (24) des modulierten Signals mit kompaktem Mantel mit Hilfe eines Leistungsverstärkers, der ein verstärktes Signal liefert;
- Senden (25) des verstärkten Signals;

**dadurch gekennzeichnet, dass** das zusätzliche Signal eine abnehmende Leistung aufweist, wenn die Amplitude des Quellensignals zunimmt.

**2.** Verfahren nach Anspruch 1, **dadurch gekennzeichnet, dass** das zusätzliche Signal durch eine abnehmende Funktion definiert ist, die durch mindestens ein Geradensegment angenähert ist.

**3.** Verfahren nach Anspruch 1, **dadurch gekennzeichnet, dass** das zusätzliche Signal durch eine abnehmende Funktion definiert ist, die durch eine gebrochene Linie angenähert ist, wobei die gebrochene Linie aus mindestens drei Segmenten besteht, wobei ein erstes Segment kleinen Amplituden entspricht und ein zweites Segment mittleren Amplituden entspricht und ein drittes Segment großen Amplituden entspricht, wobei die Steigung des zweiten Segments größer ist als die Steigung des ersten und des dritten Segments.

**4.** Verfahren nach Anspruch 1, **dadurch gekennzeichnet, dass** das zusätzliche Signal durch eine abnehmende Funktion definiert ist, die einer hyperbolischen Sekantenfunktion entspricht.

**5.** Verfahren nach Anspruch 4, **dadurch gekennzeichnet, dass** die hyperbolische Sekantenfunktion durch die folgende Gleichung definiert ist:

$$f(r) = A \sec h(\eta r) = \frac{2A}{e^{\eta r} + e^{-\eta r}}$$

wobei:

A einen Steuerparameter der mittleren Ausgangsleistung darstellt,
η einen Leistungsparameter darstellt, der die Verstärkung in Reduktion des Verhältnisses Spitzenleistung zu mittlerer Leistung darstellt,
r die Amplitude des Quellensignals darstellt.

**6.** Verfahren nach einem der Ansprüche 1 bis 5, **dadurch gekennzeichnet, dass** das Quellensignal eine Mehrzahl Daten-Hilfsträger zum Tragen des DatenSignals und eine Mehrzahl leerer Hilfsträger aufweist, wobei die leeren Hilfsträger

- in dem Band definiert sind, das dem Quellensignal gemäß einem vorbestimmten Standard zugewiesen ist, und/oder
- durch Überabtastung geschaffen werden und nicht zu dem Frequenzband gehören, das dem Quellensignal zugewiesen wurde.

**7.** Verfahren nach einem der Ansprüche 1 bis 6, **dadurch gekennzeichnet, dass** der Schritt des digitalen Filterns des zusätzlichen Signals ein digitales Filtern außerhalb des Bands umsetzt, das die Hilfsträger des zusätzlichen Signals, die nicht zu dem Frequenzband gehören, das dem Quellensignal zugewiesen wurde, eliminiert.

**8.** Verfahren nach Anspruch 6, **dadurch gekennzeichnet, dass** der Schritt des digitalen Filterns des zusätzlichen Signals ein digitales Filtern, das "in dem Band reserviert" genannt wird, umsetzt, das mindestens einen Hilfsträger des zusätzlichen Signals auswählt, der einem leeren Hilfsträger entspricht, der in dem Band definiert ist, das dem Quellensignal gemäß einem vorbestimmten Standard zugewiesen ist.

**9.** Verfahren nach Anspruch 6, **dadurch gekennzeichnet, dass** der Schritt des digitalen Filterns des zusätzlichen Signals ein digitales Filtern, das "außerhalb des Bands reserviert" genannt wird, umsetzt, das mindestens einen Hilfsträger des zusätzlichen Signals auswählt, der einem leeren Hilfsträger entspricht, der von dem Überabtasten geschaffen wird und nicht zu dem Frequenzband gehört, das dem Quellensignal zugewiesen ist.

**10.** Verfahren nach Anspruch 1, **dadurch gekennzeichnet, dass** die Schritte des Erzeugens des zusätzlichen Signals, des digitalen Filterns und des Hinzufügens mindestens einmal wiederholt werden.

**11.** Verfahren nach Anspruch 10, **dadurch gekennzeichnet, dass** die Wiederholungen der Schritte des Erzeugens des zusätzlichen Signals, des digitalen Filterns und des Hinzufügens unterbrochen werden, wenn eine Variation kleiner als ein vorbestimmter Schwellenwert erreicht wird.

**12.** Verfahren nach Anspruch 11, **dadurch gekennzeichnet, dass** der Schwellenwert einem Wert zwischen 0,1 und 0,5 dB, insbesondere 0,2 dB des Verhältnisses Spitzenleistung zu mittlerer Leistung entspricht.

**13.** Multiträger-Übertragungsvorrichtung (40) eines Signals, das für ein Quellensignal repräsentativ ist, das dazu bestimmt ist, verstärkt zu werden und dann über einen Übertragungskanal übertragen zu werden, aufweisend:

- Mittel zum Erzeugen (41) eines vorbestimmten Signals, zusätzliches Signal genannt,
- Mittel zum digitalen Filtern (42, 43) des zusätzlichen Signals, die ein gefiltertes zusätzliches Signal liefern,
- Mittel zum Hinzufügen (22) des Quellensignals, gefiltertes zusätzliches Signal genannt, zu den Hilfsträgern einer Einheit vorbestimmter Hilfsträger, so dass ein Signal erzielt wird, das ein Verhältnis Spitzenleistung zu mittlerer Leistung kleiner als das Verhältnis Spitzenleistung zu mittlerer Leistung des Quellensignals aufweist, Signal mit kompaktem Mantel genannt;
- Mittel zum Modulieren einer Trägerwelle durch das Signal mit kompaktem Mantel, die ein moduliertes Signal mit kompaktem Mantel liefern;
- Mittel zum Verstärken des modulierten Signals mit kompaktem Mantel mit Hilfe eines Leistungsverstärkers (45), der ein verstärktes Signal liefert;
- Mittel zum Senden (46) des verstärkten Signals;

**dadurch gekennzeichnet, dass** das zusätzliche Signal eine abnehmende Leistung aufweist, wenn die Amplitude des Quellensignals zunimmt.

14. Computerprogrammprodukt, das von einem Kommunikationsnetz heruntergeladen und/oder auf einem durch den Computer lesbaren Träger gespeichert werden kann, und das von einem Prozessor ausgeführt werden kann, **dadurch gekennzeichnet, dass** es Programmcodeanweisungen für die Umsetzung des Übertragungsverfahrens nach wenigstens einem der Ansprüche 1 bis 9 enthält, wenn es auf einem Computer ausgeführt wird.

Fig. 1

Fig. 2

Fig. 3

Fig. 4

Fig. 5

6001

6002 6003 6002

6000

$X_n$ → 604 → 605 → $C_{kc}$

6007

6008

<u>Fig. 6A</u>

Fig. 6B

Fig. 6C

## RÉFÉRENCES CITÉES DANS LA DESCRIPTION

**Documents brevets cités dans la description**

- FR 2913835

**Littérature non-brevet citée dans la description**

- A classification of methods for efficient power amplification of signals. **Y. Louet ; J. Palicot.** Annals of Télécommunications. Juillet 2008, vol. 63, 351-368
- **X. Li ; L. Cimini.** Effects of clipping and filtering on the performance of OFDM. *Electronic Letters,* 1998, vol. 2 (5), 131-133
- *Frame structure channel coding and modulation for a second generation digital terrestrial television broadcasting system (DVB-T2),* Juin 2008
- **M. De Courville ; P. Duhamel ; P. Madec ; J. Palicot.** Blind Equalization of OFDM Systems Based on the Minimization of a Quadratic Criterion. *ICC'96,* Juin 1996